# EUROPÄISCHE PATENTANMELDUNG

(11) **EP 2 056 040 A1**
(43) Veröffentlichungstag der Anmeldung: **06.05.2009**
(21) Anmeldenummer: 08168100.9
(22) Anmeldetag: 31.10.2008
(51) Int. Cl.: F24J 3/08

(54) **Abstandshalter für die Sondenrohre einer Erdwärmesonde**

(30) Priorität: 31.10.2007 CH 16892007
(71) Anmelder: Broder AG, 7320 Sargans (CH)
(72) Erfinder: Broder, Mathias, CH-7320, Sargans (CH)
(74) Vertreter: Hasler, Erich

(57) **Zusammenfassung**

Es ist ein Abstandshalter (10) für eine Erdwärmesonde beschrieben, die wenigstens zwei Sondenrohre (52 - 55) aufweist, von denen eines einen Vorlauf und das andere Sondenrohr einen Rücklauf für eine Wärmeträgerflüssigkeit bildet und die an einem Sondenkopf miteinander verbunden sind. Der Abstandshalter (10) weist wenigstens zwei Aufnahmeschalen (11 - 14) für die Sondenrohre (52 - 55) auf, die durch eine Halterung (16) miteinander verbunden sind. Die Halterung (16) ist in einer ersten Endposition, in der die Aufnahmeschalen (11 - 14) einen ersten Abstand voneinander aufweisen, fixierbar und in einen zweiten Zustand bringbar, in der die Aufnahmeschalen (11 - 14) für die Sondenrohre (52 - 55) einen grösseren Abstand voneinander aufweisen als in der ersten Endposition. An den Aufnahmeschalen (11 - 14) für die Sondenrohre (52 - 55) sind Distanzvorsprünge (20) angeordnet, die jeweils von einer der Halterung (16) abgewandten Aussenseite der Aufnahmeschalen (11 - 14) abragen.

## Beschreibung

Die Erfindung betrifft einen Abstandshalter für die Sondenrohre einer Erdwärmesonde für den Einsatz in Tiefbohrungen gemäss dem Oberbegriff des Patentanspruchs 1.

Die absehbare Verknappung fossiler Energieträger und die Notwendigkeit, die Emissionen von Luftschadstoffen und von CO₂ zu reduzieren, haben in der Wärmeproduktion zu einem Umdenken geführt und der Anwendung alternativer, erneuerbarer Energien, insbesondere von schadstofffreien Technologien, zu einer grösseren Akzeptanz verholfen. Eine besonders interessante Form der Wärmeproduktion besteht in der Nutzung der Erdwärme. Erdwärme oder geothermische Energie ist die in Form von Wärme gespeicherte Energie unterhalb der Erdoberfläche. Bereits etwa 10 bis 20 m unter der Erdoberfläche weist das Erdreich eine über das ganze Jahr annähernd konstante Temperatur auf, die sich mit zunehmender Tiefe erhöht. Diese Temperatur wird vom Wärmefluss aus dem Erdinneren bestimmt. Die Wärmegewinnung erfolgt in der Regel mittels Erdwärmesonden, die in eine vertikale, dicht hinterfüllte Bohrung von üblicherweise 50 bis 350 m Tiefe eingebaut werden. Die kompakte Hinterfüllung der Tiefbohrung gewährleistet einen störungsfreien Wärmefluss zwischen dem Untergrund und der Erdwärmesonde und verhindert unerwünschte vertikale Sickerströmungen längs der Sonde. In der Erdwärmesonde zirkuliert ein Wärmeträgermedium, meist eine Wärmeträgerflüssigkeit, über die mit Hilfe einer Wärmepumpe dem Untergrund Wärme entzogen wird. Es besteht auch die Möglichkeit, durch eine Umkehrung des Vorgangs überschüssige Wärme in den Untergrund abzuleiten, beispielsweise um im Sommer ein Gebäude zu kühlen.

Die Erdwärmesonde weist wenigstens zwei, meist vier Sondenrohre auf, die unter Bildung eines U paarweise miteinander verbunden sind. Jeweils eines der Sondenrohre dient als Vorlauf, während das andere Sondenrohr den Rücklauf für die in der Erdwärmesonde zirkulierende Wärmeträgerflüssigkeit bildet. Die Verbindung eines Sondenrohrpaares ist dabei innerhalb eines Sondenkopfes angeordnet, der bis zum Grund der Tiefbohrung vorgeschoben wird. Zwischen den Sondenrohren ist ein Injektionsrohr angeordnet, welches zusammen mit der Erdwärmesonde in die Bohrung vorgeschoben wird und zur Hinterfüllung der Bohrung dient. Die Sondenrohre und das Injektionsrohr bestehen üblicherweise aus Kunststoff, beispielsweise aus Polyäthylen, und weisen üblicherweise Wandstärken von ca. 2,5 mm bis ca. 5 mm auf. Der Rohrdurchmesser beträgt meist ca. 30 mm bis ca. 50 mm.

Erdwärmesonden gewinnen die Wärme in Tiefbohrungen, die bis zu 350 m tief sein können. Bei diesen Tiefen ist es unmittelbar einsichtig, dass die Sondenrohre und das Injektionsrohr hinsichtlich ihrer relativen Lage festgelegt werden müssen, damit die Erdwärmesonde ohne Schwierigkeiten in die Bohrung eingeführt und vorgeschoben werden kann. Auch muss verhindert werden, dass die Vorlauf- und Rücklaufsondenrohre miteinander in Berührung kommen, da dies zu Wärmeverlusten führen kann. Aneinander anliegende Sondenrohre können auch die Hinterfüllung der Tiefbohrung beeinträchtigen. Für die relative Festlegung der Lage der Sondenrohre sind daher bereits clipartige Abstandshalter bekannt, die paarweise durch einen Federbügel verbunden sind. Die clipartigen Abstandshalter werden in bestimmten axialen Abständen voneinander jeweils mit einem Vorlauf- und einem Rücklaufsondenrohr verbunden. Lösbare Verriegelungen an den clipartigen Abstandshaltern sorgen dafür, dass die Federbügel der Abstandshalter in gespanntem Zustand gehalten werden, in dem die Sondenrohre nur einen geringen Abstand voneinander aufweisen, um leichter in die Bohrung eingeführt und vorgeschoben werden zu können. Nachdem die Erdwärmesonde in die vorgesehene Tiefe vorgeschoben worden ist, werden die Verriegelungen gelöst, und die in den clipartigen Abstandshaltern gehaltenen Sondenrohre werden von den Federbügeln gegen die Bohrungswandung gedrückt.

Die an der Bohrungswandung anliegenden Sondenrohre können sich insbesondere bei wasserführenden Schichten als problematisch erweisen. Wasser aus einer höher gelegenen Schicht kann entlang der Sondenrohre in eine darunter liegende Schicht gelangen, was jedoch verhindert werden soll. Ausserdem stellt eine Erdwärmesonde innerhalb einer Tieflochbohrung im Betrieb bei zirkulierender Wärmeträgerflüssigkeit ein dynamisches System dar. Trotz der Hinterfüllung der Bohrung kommt es zu Bewegungen der Sondenrohre, die durch die ständige Reibung an der Bohrungswandung sogar Beschädigungen erleiden können.

Aus der DE -U 20 2007 005 796 ist ein Abstandhalter bekannt, der mehrere Rohrstränge achsparallel fixieren soll. Mit mehreren kreisringförmigen Abschnitten, die über Verbindungsstege miteinander verbunden sind, werden die Rohre des Rohrbündels aussenseitig umgriffen. An jeden solchen Abschnitt ragt ein radial nach aussen erstreckendes rippenförmiges Abstandsteil ab, welches das Rohrbündel zentrisch innerhalb der Erdbohrung abstützt. Mit diesen Abstandsteilen gleitet das Rohrbündel über die Oberfläche einer Bohrung. Nachteilig an diesem Abstandhalter ist, dass die Rohre in einem vorgegebenen Abstand zueinander fixiert sind, so dass dieser Abstand bei den eingeführten Rohren nicht erweitert werden kann. Nachteilig ist ferner, dass die Abstandteile während dem Einführen des Rohrbündels an der Bohrungswandung reiben müssen, damit sie das Rohrbündel zentrisch innerhalb der Bohrung abstützen.

Aus der EP -A 0 207 911 ist ein Wärmetauscher bekannt, der in einem Bohrloch verwendet werden soll. Er umfasst mindestens ein Wärmetauscherelement aus praktisch parallelen Rohren mit einstellbaren Abständen zwischen diesen. Diese Schrift lehrt, dass der Abstand der Rohre soweit in radialer Richtung des Bohrloches erhöht werden soll, dass die Rohrwandungen in feste Berührung mit dem Bohrloch gelangen. Nachteilig an dieser Vorrichtung ist, dass während dem Betrieb des Wärmetauschers Reibung zwischen dem Bohrloch und dem Wärmetauscherelement entstehen kann, die zu Abrieb der Rohrwandung führen kann, und dass die Abdichtung des Bohrlochs gegenüber eindringendem Wasser im Bereich der Berührungen zwischen Rohrwandung und Bohrloch ungenügend sein kann.

Ausgehend von der EP-A 0 207 910 ist die Aufgabe der vorliegenden Erfindung einen Abstandshalter für die Sondenrohre einer Erdwärmesonde zu schaffen, der die Sondenrohre für das Einführen in die Bohrung in geringem Abstand zueinander hält und möglichst geringe Reibung an der Bohrungswandung aufweist, und der die Rohre nach deren Einführung zentrisch in der Bohrung abstützt, aber eine Reibung zwischen Bohrungswandung und Rohr verhindert.

Die Lösung dieser teils widersprüchlichen Aufgaben besteht in einem Abstandshalter gemäss dem Oberbegriff des Anspruchs 1 für die Sondenrohre einer Erdwärmesonde, welcher die im kennzeichnenden Abschnitt des Patentanspruchs 1 angeführten Merkmale aufweist. Weiterbildungen und/oder bevorzugte Ausführungsvarianten der Erfindung sind Gegenstand der abhängigen Patentansprüche.

Der durch die Erfindung vorgeschlagene Abstandshalter ist für den Einsatz in Verbindung mit einer Erdwärmesonde ausgebildet, die wenigstens zwei Sondenrohre aufweist, von denen eines einen Vorlauf und das andere Sondenrohr einen Rücklauf für eine Wärmeträgerflüssigkeit bildet und die an einem Sondenkopf miteinander verbunden sind. Der Abstandshalter weist wenigstens zwei Aufnahmeschalen für die Sondenrohre auf, die durch eine Halterung miteinander verbunden sind. Die Halterung ist in einer ersten Endposition, in der die Aufnahmeschalen einen ersten Abstand voneinander aufweisen, fixierbar und in einen zweiten Zustand bringbar, in der die Aufnahmeschalen für die Sondenrohre einen grösseren Abstand voneinander aufweisen als in der ersten Endposition. An den Aufnahmeschalen für die Sondenrohre sind Distanzvorsprünge angeordnet, die jeweils von einer der Halterung abgewandten Aussenseite der Aufnahmeschalen abragen.

Indem der Abstandshalter gemäss der Erfindung an den Aufnahmeschalen für die Sondenrohre mit Distanzvorsprüngen ausgestattet ist, kommen die in den Aufnahmeschalen gehaltenen Sondenrohre im montierten Zustand nicht mehr in Kontakt zur Bohrlochwandung. Wie bei den Abstandshaltern des Stands der Technik weist auch der Abstandshalter gemäss der Erfindung eine Halterung auf, die in zwei Zustände gebracht werden kann. In einer ersten Endstellung der Halterung weisen die Aufnahmeschalen für die Sondenrohre einen geringen Abstand voneinander auf. In dieser Endstellung, die fixierbar ist, kann die Erdwärmesonde problemlos in die Bohrung eingebracht und bis zum Grund der Bohrung vorgeschoben werden. Ist die Endlage der Erdwärmesonde erreicht, wird die Halterung expandiert, bis die an den Aufnahmeschalen vorgesehenen Distanzvorsprünge an der Bohrlochwandung anliegen. Dadurch ist sichergestellt, dass die Sondenrohre einen ausreichend grossen Abstand voneinander aufweisen und dennoch keine Berührung zur Bohrlochwandung erleiden. In regelmässigen Abstanden an den Sondenrohren angebrachte Abstandshalter sorgen dafür, dass dieser Zustand über die gesamte Erstreckung der Erdwärmesonde von beispielsweise bis zu 350 m und mehr gewährleistet ist.

In einer zweckmässigen Ausgestaltung des Abstandshalters sind die Aufnahmeschalen einander paarweise etwa diagonal gegenüberliegend an der Halterung angeordnet. Bei dieser Anordnung weisen die Aufnahmeschalen den grösstmöglichen Abstand voneinander auf. Je nach Ausbildung der Halterung ergeben sich bei dieser Anordnung auch relativ einfache Verhältnisse, um den Abstandshalter bei Bedarf zu expandieren, beispielsweise auseinanderzufalten.

In einer vorteilhaften Variante der Erfindung weisen die Aufnahmeschalen in Draufsicht eine etwa C-förmige Kontur auf. Dabei ist ein Ende des C-Schenkels mit der Halterung verbunden, während das gegenüberliegende Endes des C-Schenkels den Distanzvorsprung aufweist. Durch die Ausbildung der Aufnahmeschalen etwa als ein liegendes "C" wird ein eingeclipstes Sondenrohr bereits durch den C-Schenkel der Aufnahmeschale zum Umfang hin weitgehend abgeschirmt. Der Distanzvorsprung ist derart an der Aussenseite des C-Schenkels angeordnet, dass er etwa in axialer Verlängerung der Halterung von der Aufnahmeschale abragt. Durch die axiale Anordnung der Distanzvorsprünge wirken im expandierten Zustand der Halterung nur axiale Kräfte auf die Halterung. Zusätzliche Querkräfte, die eine stabilere Ausbildung der Halterung erfordern würden, können so weitgehend vermieden werden.

Die C-förmig ausgebildeten Aufnahmeschalen besitzen Einschuböffnungen für die Sondenrohre, die etwa senkrecht zu der Erstreckung der Halterung angeordnet sind. Dabei weisen einander paarweise gegenüberliegende Aufnahmeschalen zueinander entgegengesetzt angeordnete Einschuböffnungen für die Sondenrohre auf. Durch diese Anordnung der Einschuböffnungen sind die Sondenrohre immer durch die sich zwischen den Aufnahmeschalen erstreckende Halterung voneinander getrennt.

Damit sichergestellt ist, dass die Sondenrohre im montierten Zustand keine Berührung zur Bohrlochwandung erleiden, erweisen sich Distanzvorsprünge als zweckmässig, deren axiale Länge etwa 10% bis etwa 30% des Innendurchmessers einer Aufnahmeschale beträgt.

Die Distanzvorsprünge können separate Teile sein, die an der Aussenseite der Abstandshalter montiert werden. Zweckmässigerweise sind die Distanzvorsprünge jedoch integral mit der Aufnahmeschale ausgebildet. Bei aus Kunststoff bestehenden Aufnahmeschalen bietet die integrale Ausbildung mit den Distanzvorsprüngen Vorteile bei der Herstellung. Insbesondere können Aufnahmeschalen mit integrierten Distanzvorsprüngen beispielsweise in massentechnisch erprobten Kunststoffspritzverfahren hergestellt werden.

Eine Erdwärmesonde weist wenigstens einen Vorlauf und einen Rücklauf für die Wärmeträgerflüssigkeit auf. Der Vorlauf und der Rücklauf sind an einem Sondenkopf miteinander verbunden und bilden ein U-Rohr. Die beiden Schenkel des U werden von den beiden Sondenrohren gebildet, die im Abstandshalter gehalten sind. Für eine noch bessere Ausnützung der in der Tiefe vorhandenen Wärmeenergie weisen viele Erdwärmesonden zwei Vorläufe und zwei Rückläufe auf. Entsprechend ist der Abstandshalter mit vier Aufnahmeschalen für Sondenrohre ausgestattet. Die Aufnahmeschalen sind einander jeweils paarweise gegenüberliegend mit der Halterung verbunden und etwa in gleichen Winkelabständen voneinander angeordnet. Beispielsweise weist die Halterung dabei eine kreuzförmige Gestalt auf. Die einzelnen Arme der Halterungen können zusammenschiebbar ausgebildet und mit Federn ausgestattet sein, welche die Arme im zusammengeschobenen Zustand vorspannen. Eine lösbare Verriegelung sorgt dafür, dass die Arme im zusammengeschobenen Zustand verharren, bis die Verriegelung gelöst wird. In einer anderen Ausführungsvariante kann die Halterung von einem Kunststoff gebildet sein, der in einem komprimierten Zustand der Arme fixierbar ist und bei Bedarf expandierbar ist.

Eine sehr zweckmässige Ausführungsvariante des Abstandshalters sieht vor, dass die Halterung für die Aufnahmeschalen eine Aussparung zur Aufnahme eines Injektionsrohres aufweist, die etwa mittig zwischen den Aufnahmeschalen angeordnet ist. Diese Ausführungsvariante eignet sich für Abstandshalter für zwei Sondenrohre ebenso wie für solche für Erdwärmesonden mit vier Sondenrohren. Das Injektionsrohr wird mit der Erwärmesonde in die Tiefbohrung eingeführt und vorgeschoben. Es dient zur späteren Hinterfüllung des Bohrlochs. Die Aussparung in der Halterung dient zur Festlegung und Führung des Injektionsrohrs. Das Injektionsrohr kann auch zum Lösen einer Verriegelung eingesetzt werden, welche die Halterung in der ersten, komprimierten Endposition hält. Beispielsweise kann dies durch ein axiale Relativbewegung zwischen den Abstandshaltern und dem durch die Aussparungen in den Halterungen geführten Injektionsrohr erfolgen. Das Lösen der Verriegelung kann beispielsweise auch durch eine Durchmesservergrösserung des in den Aussparungen geführten Injektionsrohres erfolgen.

Eine weitere Ausführungsvariante des Abstandshalters kann vorsehen, dass die Halterung eine Empfängereinrichtung für mechanische, thermische oder elektromagnetische Energie aufweist. Die Empfängereinrichtung erlaubt es, die Halterung aus ihrer ersten Endposition, in der die Aufnahmeschalen einen ersten Abstand voneinander aufweisen, in den zweiten Zustand überzuführen, in dem die Aufnahmeschalen für die Sondenrohre einen zweiten Abstand voneinander aufweisen, der grösser Abstand ist als der Abstand in der ersten Endposition. Dabei steht die Empfängereinrichtung zweckmässigerweise mit einer lösbaren Verriegelungseinrichtung in Verbindung. Bei dieser Ausführungsvariante des Abstandhalters kann die Verriegelung beispielsweise durch Funksignale, durch ein durch die Sondenrohre geführtes Kältemittel oder dergleichen ausgelöst werden.

In einer weiteren Ausführungsvariante der Erfindung sind die Aufnahmeschalen für die Sondenrohre unmittelbar mit einem Injektionsrohr, das zur Hinterfüllung des Bohrlochs dient, verbunden. In diesem Fall bildet das Injektionsrohr selbst die Halterung für die Aufnahmeschalen. Das Injektionsrohr besteht beispielsweise aus einem Kunststoff, der aus einem ersten Zustand, in dem das Injektionsrohr einen kleineren Durchmesser aufweist, in einen zweiten stabilen Zustand überführbar ist, in dem der Durchmesser des Injektionsrohrs vergrössert ist. Dies kann beispielsweise durch Überdruck oder durch Aufquellen des Materials erfolgen.

Weitere Vorteile und Merkmale der Erfindung ergeben sich aus der nachfolgenden Beschreibung eines Ausführungsbeispiels des Abstandshalters unter Bezugnahme auf die schematischen Zeichnungen. Es zeigen in nicht massstabsgetreuen Darstellungen:
- Fig. 1: das Prinzip einer Warmwasseraufbereitung mit Erdwärmesonde;
- Fig. 2: eine schematische Darstellung einer Erdwärmesonde mit vier Sondenrohren und einem Injektionsrohr;
- Fig. 3: einen Abstandshalter mit montierten Sondenrohren und Injektionsrohr in der ersten Endstellung seiner Halterung; und
- Fig. 4: den Abstandshalter gemäss Fig. 3 in expandiertem Zustand innerhalb eines Bohrlochs.

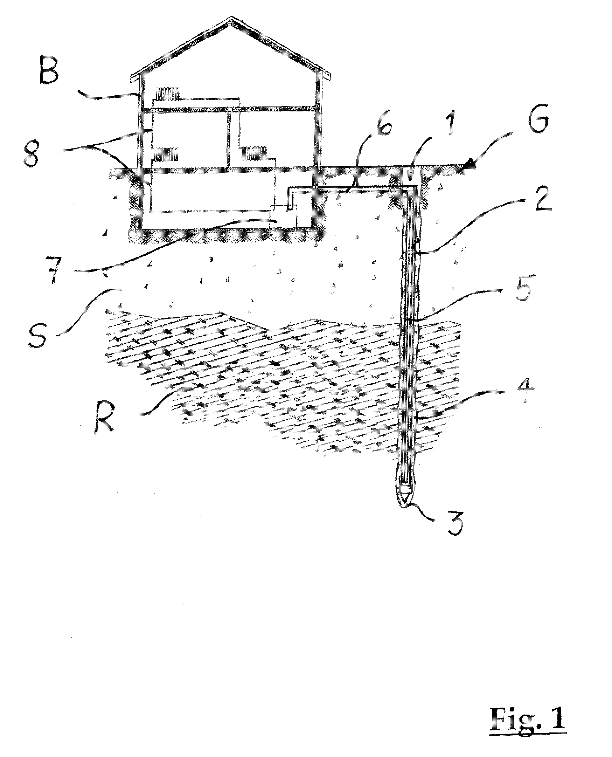

In den Darstellungen in Fig. 1 bis Fig. 4 tragen gleiche Elemente bzw. Bauteile jeweils die gleichen Bezugszeichen.

Die schematische Schnittdarstellung in Fig. 1 zeigt das Prinzip der Erdwärmesondentechnologie am Beispiel der Beheizung eines Gebäudes B. Dazu ist eine Erdwärmesonde 5, die in eine Tiefbohrung 1 von ca. 50 - 350 m eingesetzt ist, über eine Zuleitung 6 mit einer Wärmepumpe 7 verbunden. Die Wärmepumpe 7 versorgt ein Heizungssystem 8 des Gebäudes B mit der erforderlichen Menge Warmwasser. Die in die Tiefbohrung 1 eingesetzte Erdwärmesonde 5 ist ein Wärmetauscher, in dem eine Flüssigkeit zirkuliert. Gemäss dem dargestellten Ausführungsbeispiel weist die Erdwärmesonde 5 vier Sondenrohre aus Polyethylen auf, die paarweise jeweils zu einem U-Rohr zusammengefasst sind und mit der Zuleitung 6 zur Wärmepumpe 7 verbunden sind. Die Sondenrohre weisen beispielsweise Durchmesser von 32 mm oder 40 mm auf. Die Erdwärmesonde 5 wird bis zum Grund 3 der Bohrung vorgeschoben. Der zwischen der Erdwärmesonde 5 und der Bohrungswandung 2 verbleibende Hohlraum wird mit einem Verfüllmaterial 4, das beispielsweise aus einer Mischung aus Bentonit und Zement besteht, kompakt hinterfüllt, um einen guten thermischen Kontakt zwischen den Sondenrohren der Erdwärmesonde 5 und der Bohrungswandung 2 sicherzustellen. Als Verfüllmaterial 4 kommen auch andere Materialien in Frage, die eine ausreichend gute Wärmeübertragung gewährleisten. Beispielsweise ist auch eine Verfahrensvariante bekannt, bei der als Verfüllmaterial Wasser eingesetzt wird. Die in den Sondenrohren zirkulierende Flüssigkeit, meist Wasser mit einem Anteil von 15 - 20% Antigel, entzieht dem Untergrund G Erdwärme und versorgt mit dieser geothermischen Energie die Wärmepumpe 7. Mit der Wärmepumpe 7 wird die Temperatur dann auf das für Heizzwecke erforderliche Niveau angehoben. In Fig. 1 ist auch noch angedeutet, dass sich der Untergrund G meist aus oberflächennäherem weicherem Erdreich S und harten Felschichten R zusammensetzt. Die Tiefbohrung 1 wird bis in die harten Felsschichten R vorgetrieben, da dort die stabilsten, nur von der Bohrungstiefe abhängigen Temperaturverhältnisse anzutreffen sind.

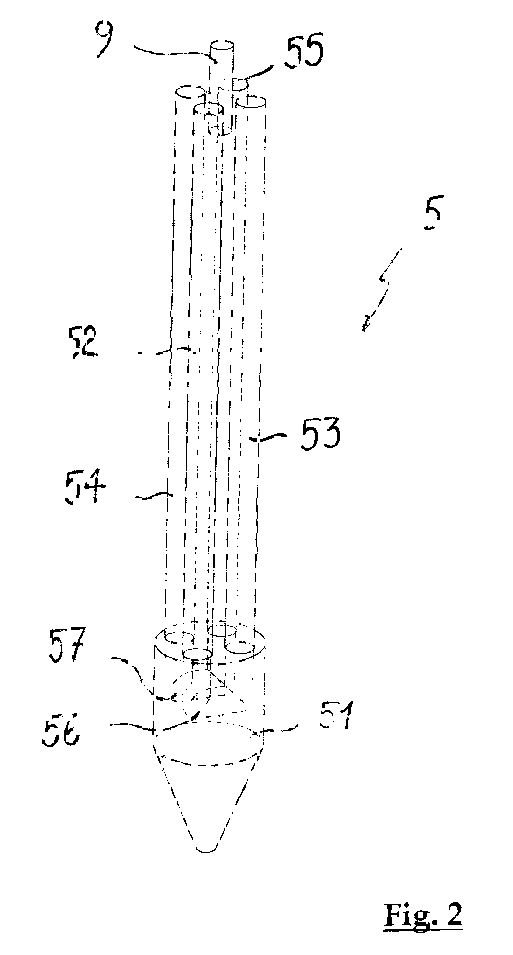

Fig. 2 zeigt die Erdwärmesonde 5 in grösserem Massstab. Die Erdwärmesonde 5 besitzt einen Sondenkopf 51 und vier Sondenrohre 51, 52, 53, 54, die jeweils paarweise zusammengefasst sind und im Sondenkopf 51 zu einem U-förmigen Rohr verbunden sind, wobei immer jeweils zwei der Sondenrohre 52, 54 einen Vorlauf und die anderen beiden Sondenrohre 53, 55 einen Rücklauf für eine in der Erdwärmesonde 5 zirkulierende Wärmeträgerflüssigkeit bilden. Die Verbindungsstücke der Sondenrohre 52, 53 bzw. 54, 55 sind mit den Bezugszeichen 56 bzw. 57 bezeichnet und innerhalb des Sondenkopfes 51 angeordnet. Derartige Erdwärmesonden 5 sind beispielsweise auch unter der Bezeichnung Duplex-Erdsonde bekannt. Zur Verfüllung des Hohlraums zwischen den Sondenrohren 52 - 55 und der Bohrlochwandung ist ein Injektionsrohr 9 vorgesehen, das zwischen den Sondenrohren 51 - 54 angeordnet ist und gemeinsam mit der Erdwärmesonde 5 in die Tiefbohrung vorgeschoben wird. Der Durchmesser der Sondenrohre 52 - 55 beträgt beispielsweise 40 mm. Der Durchmesser des Injektionsrohrs 9 beträgt beispielsweise 32 mm. Das Injektionsrohr weist eine Wandstärke von ca. 2.9 mm auf. Die Wandstärke der Sondenrohre 52 - 55 beträgt beispielsweise 3.7 mm. Als Material für die Sondenrohre 52 - 55 und für das Injektionsmaterial kommt beispielsweise Polyäthylen MDPE PN 16 zum Einsatz.

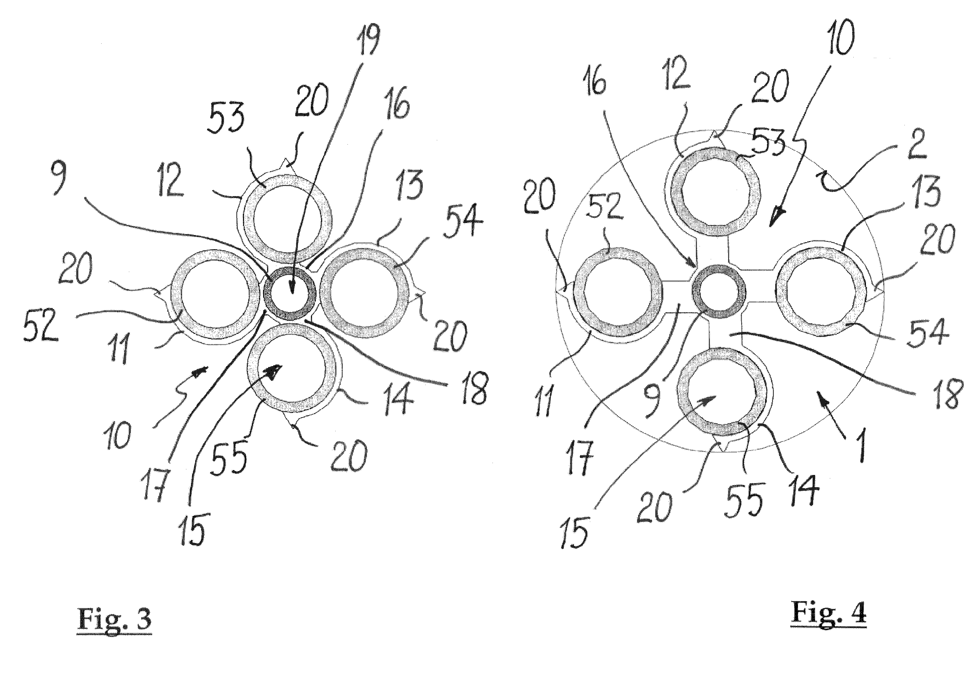

Fig. 3 und 4 zeigen einen an einer Erdwärmesonde montierten Abstandshalter 10 in zwei Zuständen. Dabei zeigt Fig. 3 den Abstandshalter 10 in dem Zustand für das Einführen und Vorschieben der Erdwäremsonde in eine Tiefbohrung. Fig. 4 zeigt einen expandierten Abstandshalter 10 an einer vollständig bis zum Grund der Tiefbohrung 1 vorgeschobenen Erdwärmesonde. Der Abstandshalter 10 weist vier C-förmig ausgebildete clipartige Aufnahmeschalen 11,12,13,14 für die Sondenrohre 52, 53, 54, 55 der Erdwärmesonde auf. Die Aufnahmeschalen 11 - 14 sind mit einer Halterung 16 verbunden, die zwei senkrecht zueinander verlaufende Arme 17, 18 aufweist. Jede Aufnahmeschale 11 -14 ist mit einer Einschuböffnung 15 für die Sondenrohre 52 - 55 ausgestattet, die jeweils zu dem halbschalenartigen C-Schenkel der benachbarten Aufnahmeschale weist. Durch diese konstruktive Massnahme sind zwei in Umfangsrichtung benachbarte Sondenrohre immer durch einen Halbarm der Halterung 16 bzw. eine damit verbundene Aufnahmeschale voneinander getrennt. Im Kreuzungsbereich der beiden Arme 17,18 weist die Halterung 16 eine Aussparung 19 auf, die zur Führung des eingeschobenen Injektionsrohres 9 dient. Etwa in axialer Verlängerung der Arme 17,18 der Halterung 16 ragen von den Aussenseiten der Aufnahmeschalen 11 - 14 Distanzvorsprünge 20 ab. Die axiale Länge der Distanzvorsprünge 20 beträgt dabei jeweils ca. 10 % bis ca. 30 % des Innendurchmessers einer Aufnahmeschale 11 -14. Die Distanzvorsprünge 20 können als separate Bauteile ausgebildet sein und an den Aussenflächen der Aufnahmeschalen 11 - 14 montiert sein. Vorzugsweise sind die Distanzvorsprünge 20 jedoch integral mit den C-förmigen Aufnahmeschalen 11 -14 ausgebildet. Insbesondere bei aus Kunststoff bestehenden Aufnahmeschalen 11 - 14 lassen sich integral angeformte Distanzvorsprünge sehr einfach beispielsweise in einem Kunststoffspritzverfahren herstellen.

In der Darstellung der Fig. 3 befindet sich die Halterung 16 in einer ersten Endposition, in der die Aufnahmeschalen 11 - 14 einen ersten, kleinen Abstand voneinander aufweisen. Die Arme 17,18 der Halterung 16 können beispielsweise gegen die Rückstellkraft einer Feder teleskopisch zusammenschiebbar sein. Zur Festlegung der Halterung 16 in der ersten Endposition ist beispielsweise eine nicht näher dargestellte lösbare Verriegelungseinrichtung vorgesehen. Die Halterung kann beispielsweise auch von einem Polymerkörper gebildet sein, der durch Druck in seine erste Endposition gebracht worden ist und erst durch mechanische, thermische oder elektromagnetische Energiezufuhr unter Ausnützung eines Memory-Effekts wieder expandiert.

Fig. 4 zeigt den Abstandshalter 10 in seinem expandierten Zustand. Der Abstandshalter 10 wird in diesen Zustand gebracht, wenn die Erdwärmesonde bis zum Grund der Tiefbohrung 1 vorgeschoben worden ist. Dazu können an der Halterung 16 nicht näher dargestellte Empfängereinrichtungen vorgesehen sein, welche eine Zufuhr mechanischer, thermischer oder elektromagnetischer Energie in eine Lösung einer Verriegelung und/oder in eine Aktivierung der Expansion umsetzen. Die Arme 17,18 der Halterung 16 expandieren, bis die Distanzvorsprünge 20, die von den Aussenflächen der Aufnahmeschalen 11 -14 für die Sondenrohre 52 - 55 abragen, an der Bohrlochwandung 2 anliegen. Die Distanzvorsprünge 20 verhindern, dass die Sondenrohre 52 - 55 unmittelbar mit der Bohrlochwandung 2 in Berührung geraten. Dadurch können Beschädigungen vermieden und Wärmeverluste verhindert werden. Die Sondenrohre 52 - 55 sind in einer exakt definierten Position im Bohrloch 1 gehalten. Dies erleichtert auch die Hinterfüllung der Tiefbohrung 1 über das Injektionsrohr 9. Die Abstände der Sondenrohre 52 - 55 voneinander verhindern Wärmeübertragungen von den Rückläufen zu den Vorläufen.

Die Abstandhalter sind einfach an den Sondenrohren der Erdwärmesonde montierbar; die Sondenrohre müssen nur in die Aufnahmeschalen eingeclipst werden. Sie behindern das Einführen und das Vorschieben der Erdwärmesonde in die Tiefbohrung nicht. Nach Erreichen des Bohrlochgrundes ist die Halterung durch Energiezufuhr, beispielsweise durch axiales Ziehen am Injektionsrohr, einfach expandierbar.

Der Abstandhalter ist am Beispiel einer Erdwärmesonde erläutert worden, die vier Sondenrohre aufweist. Es versteht sich jedoch, dass der Abstandhalter auch für die Festlegung von Erdwärmesonden mit nur zwei Sondenrohren ausgebildet sein kann.

In diesem Fall weist die Halterung nur einen Arm auf, an dessen Enden die Aufnahmeschalen für die Sondenrohre angebracht sind.

## Patentansprüche

1. Abstandshalter für eine Erdwärmesonde (5), die wenigstens zwei Sondenrohre (52 - 55) aufweist, von denen eines einen Vorlauf und das andere Sondenrohr einen Rücklauf für eine Wärmeträgerflüssigkeit bildet und die an einem Sondenkopf (51) miteinander verbunden sind, mit wenigstens zwei Aufnahmeschalen (11 -14) für die Sondenrohre (52 - 55), die durch eine Halterung (16) miteinander verbunden sind, welche in einer ersten Endposition, in der die Aufnahmeschalen (11 -14) einen ersten Abstand voneinander aufweisen, fixierbar sind und in einen zweiten Zustand bringbar ist, in der die Aufnahmeschalen (11 - 14) für die Sondenrohre (52 - 54) einen grösseren Abstand voneinander aufweisen als in der ersten Endposition, **dadurch gekennzeichnet, dass** an den Aufnahmeschalen (11 - 14) für die Sondenrohre (52 - 55) Distanzvorsprünge (20) angeordnet sind, die jeweils von einer der Halterung (16) abgewandten Aussenseite der Aufnahmeschalen (11 -14) abragen.

2. Abstandshalter nach Anspruch 1, **dadurch gekennzeichnet, dass** die Aufnahmeschalen (11 -14) einander paarweise etwa diagonal gegenüberliegend an der Halterung (16) angeordnet sind.

3. Abstandshalter nach Anspruch 1 oder 2, **dadurch gekennzeichnet, dass** die Aufnahmeschalen (11 - 14) in Draufsicht eine etwa C-förmige Kontur aufweisen, wobei ein Ende des C-Schenkels mit der Halterung (16) verbunden ist und das gegenüberliegende Endes des C-Schenkels den Distanzvorsprung (20) aufweist, der etwa in axialer Verlängerung der Halterung (16) von der Aussenseite der Aufnahmeschale (11 -14) abragt.

4. Abstandshalter nach Anspruch 3, **dadurch gekennzeichnet, dass** einander paarweise gegenüberliegende Aufnahmeschalen (11 -14) zueinander entgegengesetzt angeordnete Einschuböffnungen (15) für die Sondenrohre (52 - 55) aufweisen.

5. Abstandshalter nach einem der vorhergehenden Ansprüche, **dadurch gekennzeichnet, dass** der Distanzvorsprung (20) eine axiale Länge aufweist, die etwa 10% bis etwa 30% des Innendurchmessers einer Aufnahmeschale (11 -14) beträgt.

6. Abstandshalter nach einem der vorhergehenden Ansprüche, **dadurch gekennzeichnet, dass** der Distanzvorsprung (20) integral mit der Aufnahmeschale (11 - 14) ausgebildet ist.

7. Abstandshalter nach einem der vorhergehenden Ansprüche, **dadurch gekennzeichnet, dass** vier Aufnahmeschalen (11 -14) für Sondenrohre (52 - 55) vorgesehen sind, die einander jeweils paarweise gegenüberliegend mit der Halterung (16) verbunden sind und etwa in gleichen Winkelabständen voneinander angeordnet sind.

8. Abstandshalter nach einem der vorhergehenden Ansprüche, **dadurch gekennzeichnet, dass** die Halterung (16) für die Aufnahmeschalen (11 -14) eine Aussparung (19) zur Aufnahme eines Injektionsrohres (9) aufweist, die etwa mittig zwischen den Aufnahmeschalen (11 - 14) angeordnet ist.

9. Abstandshalter nach einem der vorangehenden Ansprüche, **dadurch gekennzeichnet, dass** die Halterung eine Empfängereinrichtung für mechanische, thermische oder elektromagnetische Energie aufweist, über welche die Halterung aus ihrer ersten Endposition, in der die Aufnahmeschalen einen ersten Abstand voneinander aufweisen, in den zweiten Zustand überführbar ist, in dem die Aufnahmeschalen für die Sondenrohre einen zweiten Abstand voneinander aufweisen, der grösser ist als der Abstand in der ersten Endposition.

10. Abstandshalter nach Anspruch 9, **dadurch gekennzeichnet dass** die Empfängereinrichtung eine lösbare Verriegelungseinrichtung umfasst.

11. Abstandshalter nach einem der Ansprüche 1 - 7, **dadurch gekennzeichnet, dass** die Aufnahmeschalen für die Sondenrohre unmittelbar an der Aussenwandung eines Injektionsrohres für die Hinterfüllung einer Bohrung angebracht sind, welches Injektionsrohr einen Aussendurchmesser aufweist, der bei Bedarf permanent vergrösserbar ist.
